# EUROPÄISCHE PATENTSCHRIFT

(11) **EP 2 555 417 B1**
(45) Veröffentlichungstag und Bekanntmachung des Hinweises auf die Patenterteilung: **29.10.2014**
(21) Anmeldenummer: 11176379.3
(22) Anmeldetag: 03.08.2011
(51) Int. Cl.: H02P 6/18

(54) **Bestimmung eines Rotorwinkels eines Elektromotors in einem Fahrzeug mit Radsensoren**
Determination of a rotor angle of an electric motor in a vehicle with wheel sensors
Détermination de l'angle d'un rotor d'un moteur électrique dans un véhicule équipé de capteurs de roue

(43) Veröffentlichungstag der Anmeldung: 06.02.2013
(73) Patentinhaber: Siemens Aktiengesellschaft, 80333 München (DE)
(72) Erfinder: Köpken, Hans-Georg, 91056 Erlangen (DE)

(56) Entgegenhaltungen:
- EP-A1- 1 862 365
- CN-Y- 201 414 063
- DE-A1- 10 215 428
- DE-A1- 10 315 754
- US-A1- 2010 181 952
- BAUSCH H ET AL: "Feed-forward control of current excited synchronous drives", ICEM 94. INTERNATIONAL CONFERENCE ON ELECTRICAL MACHINES SOC. ELECTR. ELECTRON. PARIS, FRANCE, Bd. 1, 5. September 1994 (1994-09-05), - 8. September 1994 (1994-09-08), Seiten 220-225 VOL.1, XP002669654,

## Beschreibung

Die vorliegende Erfindung betrifft ein Verfahren zum Bestimmen eines absoluten Rotorwinkels eines Elektromotors eines Fahrzeugs. Darüber hinaus betrifft die vorliegende Erfindung ein Fahrzeug mit mindestens einem Rad, einem Elektromotor zum Antrieb des mindestens einen Rads und einem Radsensor zum Ermitteln eines Drehwinkels des mindestens einen Rads.

Elektrisch betriebene Fahrzeuge, seien es reine Elektroautos oder Hybridfahrzeuge, besitzen einen Elektromotor, der häufig als Synchronmotor ausgebildet ist. Dieser Synchronmotor wird üblicherweise von einem Umrichter angesteuert.

Der geregelte Betrieb des permanenterregten Synchronmotors (PMSM) benötigt eine Rotorlageinformation. Normalerweise wird dazu ein Drehgeber am Rotor eingesetzt, der eine eindeutige Bestimmung der Rotorlage (zumindest innerhalb einer Polteilung) ermöglicht. Für derartige Drehgeber wird jedoch eine Anschlussleitung benötigt, die diesen mit der Umrichter- bzw. in Inverterregelung verbindet, und darüber hinaus ist eine Auswerteelektronik in der Inverterregelung vorzusehen. Für die Anschlussleitung und die Auswerteelektronik sind entsprechender Platz bereitzustellen und Kosten einzukalkulieren.

Aus der Druckschrift DE 10 2004 008 250 B4 ist ein Verfahren zur Bestimmung der Rotorlage eines Synchronmotors bekannt. Dabei wird eine Vielzahl von Stromvektoren an den Synchronmotor in unterschiedlichen Richtungen angelegt und es werden die zum Erzielen einer definierten Auslenkung des Rotors jeweils notwendigen Beträge der Stromvektoren ermittelt. Ferner wird der Kehrwert der Beträge der Stromvektoren bestimmt. Zusätzlich werden die Fourierkoeffizienten der ersten Harmonischen der Kehrwerte der Beträge der Stromvektoren mittels digitaler Filterung über mehrere Kehrwerte bestimmt. Schließlich wird die Rotorlage des Synchronmotors anhand der Fourierkoeffizienten berechnet.

Des Weiteren ist in der Druckschrift DE 102 26 974 A1 ein Verfahren und eine Vorrichtung zur Bestimmung einer Rotorlage einer feldorientiert betriebenen Drehfeldmaschine ohne mechanischen Sensor offenbart. Ein zur Pulsweitenmodulation synchroner feldorientierter Testraumzeiger wird einem geforderten Sollspannungs-Raumzeiger überlagert. Pro Schaltperiode werden wenigstens zwei Stromamplituden ermittelt, und in Abhängigkeit dieser Stromamplitude wird ein testsignalbedingter Stromwechselantrieb bestimmt, der anschließend in einen proportionalen Fehlerwinkel gewandelt wird. Eine geschätzte Rotorlage wird derart nachgeführt, dass der Fehlerwinkel zu Null wird. Somit erhält man eine sensorlose Lageerkennung.

Bausch H, Zeng W. und Kanelis K. offenbaren in "Feed-Forward Control of Current Excited Synchronous Drives", 1994, ein Verfahren zum Detektieren einer initialen Rotorposition.

Die EP 1 862 365 A1 offenbart eine Fahrzeugsteuerung für ein Hybridfahrzeug.

Die US 2010/0181852A1 offenbart ein Verfahren zum Detektieren einer initialen Rotorposition bei einer permanenterregten Synchronmaschine.

Die DE 102 15 428 A1 offenbart ein Verfahren zur Bestimmung der Rotorlage eines Synchronmotors.

Die DE 103 15 754 A1 offenbart ein Verfahren und eine Vorrichtung zur Bestimmung der Rotorposition bei Synchronmaschinen ohne Absolutinformation.

Die CN 201414063 Y offenbart die,Rotorlagebestimmung eines bürstenlosen Gleichstrompermanentmagnetmotors mittels eines Hall-Sensors.

Die Aufgabe der vorliegenden Erfindung besteht darin, ohne einen Drehgeber am Rotor eines Elektromotors einen zuverlässigen, geregelten Betrieb des Elektromotors eines Fahrzeugs zu ermöglichen.

Erfindungsgemäß wird diese Aufgabe gelöst durch ein Verfahren nach Anspruch 1 zum Bestimmen eines absoluten Rotorwinkels eines Elektromotors eines Fahrzeugs durch
- Ermitteln eines Drehwinkels eines Rads des Fahrzeugs,
- Berechnen eines relativen Rotorwinkels aus dem Drehwinkel des Rads,
- Ermitteln eines Anfangswinkels des Rotors des Elektromotors durch Pollageidentifikation auf der Basis von Ansteuersignalen des Elektromotors und
- Bestimmen des absoluten Rotorwinkels aus dem Anfangswinkel und dem relativen Rotorwinkel.

Darüber hinaus wird erfindungsgemäß bereitgestellt ein Fahrzeug nach Anspruch 7 mit
- mindestens einem Rad,
- einem Elektromotor zum Antrieb des mindestens einen Rads und
- einem Radsensor zum Ermitteln eines Drehwinkels des mindestens einen Rads, sowie
- einer Recheneinrichtung zum Berechnen eines relativen Rotorwinkels aus dem Drehwinkel des Rads und
- einer Messeinrichtung zum Ermitteln eines Anfangswinkels des Rotors des Elektromotors durch Pollageidentifikation auf der Basis von Ansteuersignalen des Elektromotors, wobei
- durch die Recheneinrichtung ein absoluter Rotorwinkel aus dem Anfangswinkel und dem relativen Rotorwinkel bestimmbar ist.

Die nach Stand der Technik bekannte Rotorlagebestimmung erfordert Ströme, die zu Geräuschen und Motorerwärmung führen. Durch die Kombination mit den Radsensoren wird der Einsatz dieser Verfahren auf ein sehr kurzes Zeitintervall begrenzt, so dass danach keinerlei zusätzliche Geräusche oder Verluste entstehen.

Es werden zur Pollageidentifikation Ansteuersignale des Elektromotors hinsichtlich einer magnetischen Sättigung des Stators des Elektromotors ausgewertet. Damit können allein aus den Ansteuersignalen Informationen bzgl. der Rotorlage gewonnen werden, ohne dass sich der Rotor bewegen muss.

Darüber hinaus wird die Pollageidentifikation zweistufig durchgeführt, wobei in einer ersten Stufe der Elektromotor mit ersten Stromimpulsen unterschiedlicher Richtungen (Stromvektoren) angesteuert wird, die keine Rotorbewegung hervorrufen, und bei denen sich in zwei Richtungen Extremwerte der Stromstärken der ersten Stromimpulse (Beträge der Stromvektoren) ergeben, und wobei in einer zweiten Stufe der Elektromotor mit zwei zweiten Stromimpulsen, jeweils einer in die zwei Richtungen, angesteuert wird, die betragsmäßig größer als die ersten Stromimpulse sind und die jeweils eine Rotorbewegung hervorrufen, sodass die Rotorbewegungen eine eindeutige Information über die Pollage liefern. Auf diese Weise lässt sich die Rotorlage kombiniert sättigungs- und bewegungsbasiert ermitteln.

In vorteilhafter Weise wird also der absolute Rotorwinkel eines Elektromotors eines Fahrzeugs anhand der Signale der Radsensoren zusammen mit einem an sich bekannten Verfahren zur Pollageidentifikation ermittelt. Auf diese Weise kann Platz und Kosten für einen Drehgeber am Rotor, für die Anschlussleitung und für die Auswerteelektronik eingespart werden.

Vorzugsweise wird beim Berechnen des relativen Rotorwinkels eine Getriebeübersetzung eines Getriebes des Fahrzeugs berücksichtigt. Damit kann auch bei Fahrzeugen, bei denen die Räder über ein Getriebe an den Motor gekoppelt sind, anhand der Radsensorinformation auf die Drehung des Rotors des Elektromotors rückgeschlossen werden.

Vorteilhafterweise wird zur Pollageidentifikation eine Fourieranalyse der Ansteuersignale durchgeführt. Die so gewonnenen Informationen im Spektralbereich liefern zuverlässige Informationen bzgl. der Rotorlage.

Entsprechend einer alternativen Ausführungsform werden zur Pollageidentifikation mehrere Stromimpulse unterschiedlicher Richtungen (Stromvektoren) an den Elektromotor geschickt, die Bewegungen des Elektromotors werden sodann beobachtet, und daraus wird auf die Pollage geschlossen. Damit ergibt sich eine bewegungsbasierte Pollageidentifikation, die von der oben genannten sättigungsbasierten Pollageidentifikation unabhängig ist.

Bei der bewegungsbasierten Pollageidentifikation kann ein Stromimpuls in einer ersten Richtung ermittelt werden, der eine Rotorbewegung in einer ersten Richtung verursacht, ein Stromimpuls in einer zweiten Richtung ermittelt werden, der eine Rotorbewegung in einer der ersten entgegengesetzten zweiten Richtung hervorruft, und der gesuchte Pol als zwischen der ersten und der zweiten Richtung liegend interpretiert werden. Auf diese Weise lässt sich die Pollage mit wenigen Rotorbewegungen ermitteln.

Darüber hinaus kann der Elektromotor auf eine vorbestimmte Umdrehungszahl gebracht werden, und eine im Stator des Elektromotors induzierte Spannung zur Bestimmung der Pollage zusätzlich herangezogen werden. Hierdurch lässt sich die Pollage auch bei Betrieb des Motors besser ermitteln.

Die vorliegende Erfindung wird nun anhand der beigefügten Zeichnungen näher erläutert, in denen zeigen:
- FIG 1: eine Prinzipskizze eines Fahrzeugs mit der Möglichkeit der Bestimmung des Rotorwinkels;
- FIG 2: einen Querschnitt durch einen Motor und
- FIG 3: Koordinatensysteme bei einer sensorlosen Rotorlageermittlung.

Die nachfolgend näher geschilderten Ausführungsbeispiele stellen bevorzugte Ausführungsformen der vorliegenden Erfindung dar.

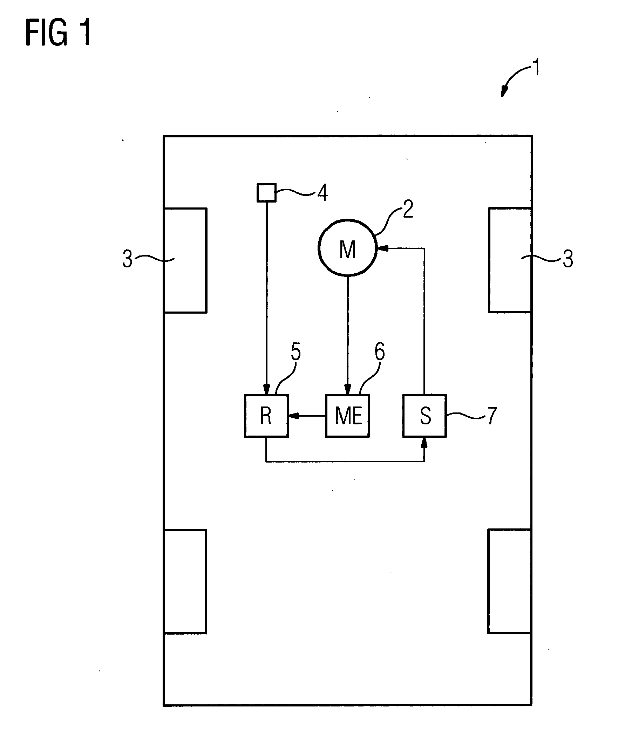

In dem Beispiel von FIG 1 ist ein Elektrofahrzeug 1 dargestellt, das zum Antrieb einen permanentmagneterregten Synchronmotor 2 aufweist. Von diesem Elektromotor 2 werden die Räder 3 über ein nicht dargestelltes Getriebe, ggf. auch direkt, angetrieben. Darüber hinaus besitzt das Elektrofahrzeug 1 Radsensoren 4, von denen nur einer in FIG 1 eingezeichnet ist. Radsensoren 4 sind heute üblicherweise in Fahrzeugen verbaut, und sie liefern Informationen über die Radbewegung für zahlreiche Assistenzsysteme wie Antiblockiersystem, Einparkhilfen und dergleichen.

Das Elektrofahrzeug 1 besitzt hier weiterhin eine Recheneinrichtung 5, von der die Daten des Radsensors 4 aufgenommen werden. Die Daten des Radsensors 4 sind entweder Rohdaten, aus denen die Recheneinrichtung 5 einen Drehwinkel des Rads 3 berechnet, oder sie beinhalten bereits einen Drehwinkel, wobei der Radsensor 4 dann die entsprechende Vorverarbeitung durchgeführt hat. Aus dem Drehwinkel berechnet die Recheneinrichtung einen relativen Rotorwinkel.

Eine Messeinrichtung 6, die an den Elektromotor 2 angeschlossen ist, ermittelt einen Anfangswinkel des Rotors des Elektromotors 2 durch Pollageidentifikation auf der Basis von Ansteuersignalen des Elektromotors von einer Steuereinrichtung 7. Den Anfangswinkel liefert die Messeinrichtung 6 an die Recheneinrichtung 5, und diese bestimmt aus dem Anfangswinkel und dem relativen Rotorwinkel den absoluten Rotorwinkel. Diesen liefert sie an die Steuereinrichtung 7, welche ihrerseits den Elektromotor 2 entsprechend ansteuert.

Typischerweise werden bei einem Fahrzeug zwei Räder 3 über ein Differenzialgetriebe angetrieben. In diesem Fall wird dann der Mittelwert der Radwinkel der angetriebenen Räder herangezogen, um zusammen mit der Getriebeübersetzung den relativen Rotorwinkel zu bestimmen. Dies stellt jedoch nur eine inkrementelle Lageinformation dar, d.h. es muss auch der Ausgangspunkt, nämlich der Anfangswinkel der Rotorlage bestimmt werden.

Der Anfangswinkel lässt sich beispielsweise mit einer der Leistungskomponenten bestimmen, die unter dem Namen "Sinamics" von der Anmelderin vertrieben werden (vergleiche Siemens, Funktionshandbuch "Sinamics S120", 11/2009, Seite 110). Dort ist sowohl eine sättigungsbasierte als auch eine bewegungsbasierte Pollageidentifikation beschrieben. Die Pollageidentifikation entspricht dabei der Bestimmung des Rotorwinkels, da die Magnetpole auf dem Rotor angebracht sind.

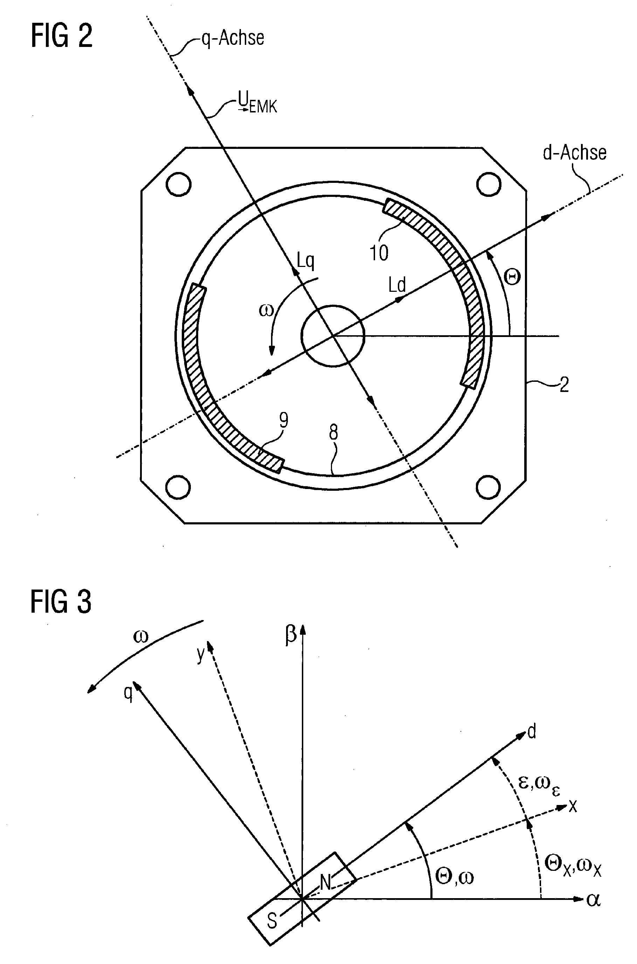

In FIG 2 ist ein Querschnitt durch eine Drehfeldmaschine bzw. einen Elektromotor 2 dargestellt. Der Rotor 8 dieses Elektromotors 2 weist hier beispielhaft zwei Permanentmagnete 9, 10 auf, die einen Erregerfluss erzeugen. Die Richtung dieses Erregerflusses wird als d-Achse bezeichnet. Wenn sich der Rotor 8 in positiver Richtung dreht, wird eine Spannung senkrecht dazu induziert. Diese Richtung wird als q-Achse bezeichnet. Die induzierte Spannung wird auch als EMK-Spannung bzw. EMK-Raumzeiger U-_{>EMK} bezeichnet. Wenn eine Spannung an die ruhende Maschine 2 angelegt wird, dann ändert sich der Maschinenstrom. Die dabei wirksame Induktivität ist in der d-Achse geringer als in der q-Achse, da der magnetische Fluss der Permanentmagnete 9, 10 den Eisenkreis in der d-Richtung sättigt.

Beim Betrieb ohne mechanischen Sensor ist die wahre Rotorlage nicht bekannt. Daher arbeitet die Lageerkennung mit einem umlaufenden x,y-Koordinatensystem. In FIG 3 ist dieses umlaufende x,y-Koordinatensystem mit einem ständerfesten α, β-Koordinatensystem und mit dem umlaufenden d,q-Rotorkoordinatensystem dargestellt. Die d-Achse dieses d,q-Rotorkoordinatensystems befindet sich in der Erregerflussrichtung des von den Permanentmagneten 9, 10 erzeugten Erregerflusses. Dieses mit der Rotorgeschwindigkeit ω umlaufende d,q-Koordinatensystem weist einen von der Rotorgeschwindigkeit ω unabhängigen Rotorlagewert θ auf. In der FIG 3 ist das umlaufende x,y-Koordinatensystem nacheilend zum d,q-Koordinatensystem eingezeichnet. Der Winkel zwischen diesen beiden umlaufenden Koordinatensystemen ist ε, der als Fehlerwinkel bezeichnet wird. Es wird hier von einem geschätzten bzw. bestimmten Anfangslagewinkel ausgegangen. Als Ergebnis erhält man einen Fehlerwinkel ε, der angibt, wie weit das x,y-Koordinatensystem gegenüber dem d,q-Koordinatensystem verdreht ist. Mittels eines Phasenregelkreises wird der Anfangslagewinkelwert derart nachgeführt, dass der Fehlerwinkel ε zu null wird. Sobald der Fehlerwinkel ε null ist, entspricht der geführte Anfangslagewinkelwert dem tatsächlichen Rotorlagewert θ der Drehfeldmaschine 2. In der FIG 3 wäre dann das x,y-Koordinatensystem und das d,q-Rotorkoordinatensystem deckungsgleich.

Im Falle der sättigungsbasierten Bestimmung des Rotorwinkels werden zunächst nacheinander Stromimpulse bzw. Stromvektoren in verschiedenen Richtungen auf den Stator gegeben. Dabei wird die Aufteilung des Stroms auf die Motorklemmen verändert, sodass entsprechende Raumzeiger entstehen. Die wirksame Induktivität ist abhängig von der Lage der Magnetpole zum Strom. Durch eine Auswertung von Spannung, Strom und Zeit können diese Induktivitätsunterschiede festgestellt werden. Es gilt: U = L · di/dt, wobei U die Spannung, L die Induktivität, i der Strom und t die Zeit bedeuten. Zur Rotorlageerkennung kann nun eine Spannung U für eine feste Zeit dt angelegt und der Strom di ausgewertet werden. Die Stromrichtung mit der geringsten Induktivität L entspricht dann der Richtung der Magnetpole. Anstelle einer Suche der Extremwerte können auch die Fourierkoeffizienten genutzt werden, um das Verfahren robuster und genauer zu machen.

Die Rotorlageerkennung lässt sich in einem zweistufigen Verfahren realisieren. Zunächst werden kleine (erste) Stromimpulse verwendet, um keine unerwünschten Bewegungen zu erzeugen. Man erkennt dann bereits zwei Extrema in Richtung der Magnetpole. Die Sättigung durch den Strom ist hier nicht sichtbar und somit ist der Strom in und gegen die Magnetrichtung nicht unterscheidbar. Daher werden in einer zweiten Stufe zwei große (zweite) Stromimpulse in diesen beiden bereits ermittelten Richtungen auf den Stator gegeben. Dadurch lässt sich eine eindeutige Pollage ermitteln. Dabei entsteht kein Drehmoment.

Entsprechend einem zweiten Ausführungsbeispiel kann die Rotorlageerkennung bewegungsbasiert erfolgen. Hierzu werden Stromimpulse bzw. Stromvektoren mit relativ großem Betrag in einer beliebigen Richtung auf den Motor 2 gegeben. Die resultierenden Drehungen werden mithilfe eines Sensors beobachtet. Die Drehung erfolgt so, dass die Magnetpole in Richtung des Stromzeigers wandern. Diesen Versuch kann man mehrfach mit verschiedenen Stromwinkeln durchführen, um aus den Bewegungen die Lage zu bestimmen. Beispielsweise können diejenigen Punkte gesucht werden, bei denen gerade noch eine Drehbewegung nach links bzw. nach rechts stattfindet. Der Magnetpol liegt dann in der Mitte zwischen den beiden Punkten bzw. Winkeln.

Die beiden Verfahren, nämlich die sättigungsbasierte und die bewegungsbasierte Lageerkennung können auch im Betrieb des Elektromotors, d. h. bei drehendem Rotor, durchgeführt werden. Sobald der Motor eine gewisse Drehzahl erreicht, kann die induzierte Spannung (EMK) zur Verbesserung des bestimmten Rotorlagewinkels dienen, wie dies in DE 102 26 974 A1 ausführlich beschrieben ist. Dazu wird eine Vorrichtung bereitgestellt, mit der in bekannter Weise die Rotorlage der Drehfeldmaschine bei hoher Drehzahl ermittelt werden kann. Diese Vorrichtung weist ein EMK-Modell, eine Einrichtung zur Bestimmung eines Fehlerwinkels und eine Einrichtung zur Bestimmung des Vorzeichens der Drehzahl auf. Der ermittelte Fehlerwinkel ε wird einem Phasenregelkreis zugeführt, der den Rotorlage-Istwert θ derart nachführt, dass der Fehlerwinkel ε zu null wird.

Der hiermit bestimmte Winkelbezug zwischen den Magnetpolen und der mithilfe der Sensoren gewonnenen Lage kann ggf. gespeichert werden. Er kann dann auch bei niedriger Drehzahl und Stillstand verwendet werden, solange das Zählen der Impulse nicht unterbrochen wurde.

In der Regel findet die Pollageidentifikation beim Start des Fahrzeugs statt. Dabei sind die Räder gebremst. Infolge dessen wird eher das sättigungsbasierte Verfahren zur Pollageidentifikation verwendet als das bewegungsbasierte.

Wie die obigen Beispiele zeigen, werden also in vorteilhafter Weise zur Bestimmung des absoluten Rotorwinkels Radsensorinformationen mit Informationen kombiniert, die durch bekannte Verfahren der Pollageidentifikation gewonnen werden können. Diese spezielle Kombination lässt sich insbesondere für die Regelung eines Elektrofahrzeugs verwenden.

## Patentansprüche

1. Verfahren zum Bestimmen eines absoluten Rotorwinkels eines Elektromotors (2) eines Fahrzeugs (1)
mit den Schritten:
- Ermitteln eines Drehwinkels eines Rads (3) des Fahrzeugs,
- Berechnen eines relativen Rotorwinkels aus dem Drehwinkel des Rads (3)
- Ermitteln eines Anfangswinkels des Rotors des Elektromotors (2) **durch** Pollageidentifikation auf der Basis von Ansteuersignalen des Elektromotors und
- Bestimmen des absoluten Rotorwinkels aus dem Anfangswinkel und dem relativen Rotorwinkel, wobei zur Pollageidentifikation Ansteuersignale des Elektromotors (2) hinsichtlich einer magnetischen Sättigung des Stators des Elektromotors ausgewertet werden,
**dadurch gekennzeichnet , dass**
- die Pollageidentifikation zweistufig durchgeführt wird, wobei in einer ersten Stufe der Elektromotor (2) mit ersten Stromimpulsen unterschiedlicher Richtungen angesteuert wird, die keine Rotorbewegung hervorrufen, und bei denen sich in zwei Richtungen Extremwerte der Stromstärken der ersten Stromimpulse ergeben, und wobei in einer zweiten Stufe der Elektromotor (2) mit zwei zweiten Stromimpulsen, jeweils eine in die zwei Richtungen, angesteuert wird, die betragsmäßig größer als die ersten Stromimpulse sind und die jeweils eine Rotorbewegung hervorrufen, sodass die Rotorbewegungen eine eindeutige Information über die Pollage liefern.

2. Verfahren nach Anspruch 1, wobei beim Berechnen des relativen Rotationswinkels eine Getriebeübersetzung eines Getriebes des Fahrzeugs (1) berücksichtigt wird.

3. Verfahren nach Anspruch 1 oder 2, wobei zur Pollageidentifikation eine Fourieranalyse der Ansteuersignale durchgeführt wird.

4. Verfahren nach einem der Ansprüche 1 bis 3, wobei zur Pollageidentifikation mehrere Stromimpulse unterschiedlicher Richtungen an den Elektromotor (2) geschickt werden, die Bewegungen des Elektromotors beobachtet werden und daraus auf die Pollage geschlossen wird.

5. Verfahren nach Anspruch 4, wobei ein Stromimpuls in einer ersten Richtung ermittelt wird, der eine Rotorbewegung in einer ersten Drehrichtung verursacht, ein Stromimpuls in einer zweiten Richtung ermittelt wird, der eine Rotorbewegung in einer der ersten entgegengesetzten zweiten Drehrichtung hervorruft, und die gesuchte Pollage als zwischen der ersten und der zweiten Richtung liegend interpretiert wird.

6. Verfahren nach einem der vorhergehenden Ansprüche, wobei der Elektromotor (2) auf eine vorbestimmte Umdrehungszahl gebracht wird, und eine im Stator des Elektromotors induzierte Spannung zur Bestimmung der Pollage zusätzlich herangezogen wird.

7. Fahrzeug (1) mit
- mindestens einem Rad (3) und
- einem Elektromotor (2) zum Antrieb des mindestens einen Rads (3),
- einem Radsensor (4) zum Ermitteln eines Drehwinkels des mindestens einen Rads,
- eine Recheneinrichtung (5) zum Berechnen eines relativen Rotorwinkels aus dem Drehwinkel des Rads und
- eine Messeinrichtung (6) zum Ermitteln eines Anfangswinkels des Rotors des Elektromotors durch Pollageidentifikation auf der Basis von Ansteuersignalen des Elektromotors, wobei
- durch die Recheneinrichtung (5) ein absoluter Rotorwinkel aus dem Anfangswinkel und dem relativen Rotorwinkel bestimmbar ist, zu welchem Zweck zur Pollageidentifikation Ansteuersignale des Elektromotors (2) hinsichtlich einer magnetischen Sättigung des Stators des Elektromotors ausgewertet werden,
**dadurch gekennzeichnet, dass**
die Recheneinrichtung (5) eingerichtet ist, die Pollageidentifikation zweistufig durchzuführen, wobei in einer ersten Stufe der Elektromotor (2) mit ersten Stromimpulsen unterschiedlicher Richtungen angesteuert wird, die keine Rotorbewegung hervorrufen, und bei denen sich in zwei Richtungen Extremwerte der Stromstärken der ersten Stromimpulse ergeben, und wobei in einer zweiten Stufe der Elektromotor (2) mit zwei zweiten Stromimpulsen, jeweils eine in die zwei Richtungen, angesteuert wird, die betragsmäßig größer als die ersten Stromimpulse sind und die jeweils eine Rotorbewegung hervorrufen, sodass die Rotorbewegungen eine eindeutige Information über die Pollage liefern.

## Claims

1. Method for determining an absolute rotor angle of an electric motor (2) of a vehicle (1)
comprising the steps:
- determining a rotation angle of a wheel (3) of the vehicle,
- calculating a relative rotor angle from the rotation angle of the wheel (3),
- determining a start angle of the rotor of the electric motor (2) by identification of the pole position on the basis of actuation signals from the electric motor and
- determining the absolute rotor angle from the start angle and the relative rotor angle, wherein for identification of the pole position, actuation signals from the electric motor (2) are evaluated with regard to magnetic saturation of the stator of the electric motor,
**characterised in that**
- the identification of the pole position is carried out in two stages, wherein in a first stage the electric motor (2) is actuated by first current pulses in different directions, which do not give rise to movement of the rotor, and in which extreme values of the current strengths of the first current pulses are generated in two directions, and wherein in a second stage the electric motor (2) is actuated by two second current pulses, one each in the two directions, the second current pulses being greater than the first current pulses and which each give rise to movement of the rotor, so that the rotor movements deliver clear information about the pole position.

2. Method according to claim 1, wherein when calculating the relative rotation angle a gear transmission of a gear of the vehicle (1) is taken into consideration.

3. Method according to claim 1 or 2, wherein a Fourier analysis of the actuation signals is carried out for identification of the pole position.

4. Method according to one of claims 1 to 3, wherein for identification of the pole position, several current pulses in different directions are sent to the electric motor (2), the movements of the electric motor are taken into consideration and the pole position is inferred therefrom.

5. Method according to claim 4, wherein a current pulse is determined in a first direction which causes movement of the rotor in a first rotation direction, a current pulse is determined in a second direction which gives rise to movement of the rotor in a second rotation direction opposite the first, and the pole position sought is interpreted as lying between the first and the second direction.

6. Method according to one of the preceding claims, wherein the electric motor (2) is brought to a predetermined r.p.m, and a voltage induced in the stator of the electric motor is used to additionally determine the pole position.

7. Vehicle (1) comprising
- at least one wheel (3) and
- one electric motor (2) for driving the at least one wheel (3),
- a wheel sensor (4) for determining a rotation angle of the at least one wheel,
- a calculation device (5) for calculating a relative rotor angle from the rotation angle of the wheel and
- a measuring device (6) for determining a start angle of the rotor of the electric motor by identification of the pole position on the basis of actuation signals from the electric motor, wherein
- by means of the calculation device (5) an absolute rotor angle can be determined from the start angle and the relative rotor angle, for which purpose actuation signals from the electric motor (2) are evaluated with regard to magnetic saturation of the stator of the electric motor for identification of the pole position,
**characterised in that** the calculation device (5) is set up to carry out identification of the pole position in two stages, wherein in a first stage the electric motor (2) is actuated by first current pulses in different directions, which do not give rise to movement of the rotor, and in which extreme values of the current strengths of the first current pulses are generated in two directions, and wherein in a second stage, the electric motor (2) is actuated by two second current pulses, one each in the two directions, the second current pulses being greater than the first current pulses and which each give rise to movement of the rotor, so that the rotor movements deliver clear information about the pole position.

## Revendications

1. Procédé de détermination d'un angle absolu d'un rotor d'un moteur ( 2 ) électrique d'un véhicule ( 1 )
comprenant les stades :
- détermination d'un angle de rotation d'une roue ( 3 ) du véhicule,
- calcul d'un angle relatif du rotor à partir de l'angle de rotation de la roue ( 3 ),
- détermination d'un angle initial du rotor du moteur ( 2 ) électrique par identification d'une position d'un pôle, sur la base de signaux de commande du moteur électrique et
- détermination de l'angle absolu du rotor à partir de l'angle initial et de l'angle relatif du rotor, dans lequel, pour l'identification de la position d'un pôle, on exploite des signaux de commande du moteur ( 2 ) électrique en ce qui concerne une saturation magnétique du stator du moteur électrique,
**caractérisé en ce que**
- on effectue l'identification de la position d'un pôle en deux étapes, dans lequel, dans une première étape, on commande le moteur ( 2 ) électrique par de premières impulsions de courant de sens différents, qui ne provoquent pas de mouvement du rotor, et dans lequel des valeurs extrêmes dans les deux sens des intensités de courant des premières impulsions de courant sont obtenues, et dans lequel, dans une deuxième étape, on commande le moteur ( 2 ) électrique par des deuxièmes impulsions de courant, respectivement une dans les deux sens, qui, en valeur absolue, sont plus grandes que les premières impulsions de courant et qui provoquent respectivement un mouvement du rotor, de sorte que les mouvements du rotor fournissent une information claire sur la position d'un pôle.

2. Procédé suivant la revendication 1, dans lequel, lors du calcul de l'angle relatif de rotation, on tient compte de la réduction d'une boîte de vitesse du véhicule ( 1 ).

3. Procédé suivant la revendication 1 ou 2, dans lequel, pour l'identification de la position d'un pôle, on effectue une analyse de Fourier des signaux de commande.

4. Procédé suivant l'une des revendications 1 à 3, dans lequel, pour l'identification de la position d'un pôle, on envoie au moteur ( 2 ) électrique plusieurs impulsions de courant de sens différents, on observe les mouvements du moteur électrique et on en déduit la position d'un pôle.

5. Procédé suivant la revendication 4, dans lequel on détermine une impulsion de courant dans un premier sens, qui provoque un déplacement du rotor dans un premier sens de rotation, on détermine une impulsion de courant dans un deuxième sens, qui provoque un déplacement du rotor dans un deuxième sens de rotation contraire au premier, et on interprète la position d'un pôle recherché comme se trouvant entre le premier et le deuxième sens.

6. Procédé suivant l'une des revendications précédentes, dans lequel on met le moteur ( 2 ) électrique à une vitesse de rotation déterminée à l'avance et on tire parti supplémentairement d'une tension induite dans le stator du moteur électrique, pour la détermination de la position d'un pôle.

7. Véhicule ( 1 ) comprenant
- au moins une roue ( 3 ) et
- un moteur ( 2 ) électrique pour entraîner la au moins une roue ( 3 ),
- un capteur ( 4 ) de roue pour la détermination d'un angle de rotation de la au moins une roue,
- un dispositif ( 5 ) informatique pour le calcul d'un angle relatif du rotor à partir de l'angle de rotation de la roue et
- un dispositif ( 6 ) de mesure pour la détermination d'un angle initial du rotor du moteur électrique, par identification d'une position d'un pôle, sur la base de signaux de commande du moteur électrique, dans lequel
- on peut, par le dispositif ( 5 ) informatique, déterminer un angle absolu du rotor à partir de l'angle initial et de l'angle relatif du rotor, en exploitant à cette fin, pour l'identification de la position d'un pôle, des signaux de commande du moteur ( 2 ) électrique en ce qui concerne une saturation magnétique du stator du moteur électrique,
**caractérisé en ce que**
le dispositif ( 5 ) informatique est conçu pour effectuer l'identification de la position d'un pôle en deux étapes, dans lequel, dans une première étape, on commande le moteur ( 2 ) électrique par de premières impulsions de courant de sens différents, qui ne provoquent pas de mouvement du rotor, et dans lequel des valeurs extrêmes dans les deux sens des intensités de courant des premières impulsions de courant sont obtenues, et dans lequel, dans une deuxième étape, on commande le moteur ( 2 ) électrique par des deuxièmes impulsions de courant, respectivement une dans les deux sens, qui, en valeur absolue, sont plus grandes que les premières impulsions de courant et qui provoquent respectivement un mouvement du rotor, de sorte que les mouvements du rotor fournissent une information claire sur la position d'un pôle.
